# EUROPEAN PATENT APPLICATION

(11) **EP 4 600 117 A1**
(43) Date of publication of application: **13.08.2025**
(21) Application number: 25155653.6
(22) Date of filing: 03.02.2025
(51) Int. Cl.: B62D 5/06

(54) **HYDRAULIC STEERING SYSTEM**

(30) Priority: 06.02.2024 IT 202400002395
(71) Applicant: CNH Industrial Italia S.p.A., 10156 Torino (IT)
(72) Inventor: Melis, Lorenzo, 10156 Turin (IT)
(74) Representative: CNH Industrial IP Department

(57) **Abstract**

Hydraulic steering system comprising an electric pump (2, 3) with two-way flow and at least one actuator cylinder (4) powered by said electric pump via a closed hydraulic circuit (1) comprising at least a first supply line (L1) and a second supply line (L2) and in which said circuit includes mutual connection means (12, 12', 13, 13', 14, 15) between said first and second lines arranged so that when the electric pump is operational by pressurizing one of said first and second supply lines at a first pressure value, said connection means are configured to pressurize the other line at a second established pressure value, lower than said first pressure value.

## Description

### Field of the invention

The present invention refers to a hydraulic control system useful for controlling the steering of a vehicle, in particular of a work vehicle, such as an agricultural or construction vehicle.

The present steering system is based on a closed hydraulic circuit.

### State of the art

Conventional hydraulic power steering systems generally include a steering gear having a hydraulic motor powered by a fluid pump that draws hydraulic fluid from a fluid reservoir and is typically driven by the combustion engine or, indirectly, by the vehicle driveline.

The steering wheel is connected to a rotary control valve that directs hydraulic fluid to the hydraulic motor in response to a clockwise or counterclockwise rotation of the steering wheel. The hydraulic motor is operationally connected to the vehicle wheel steering linkages to cause the vehicle to steer.

Most hydraulic steering system circuits are open, also called "open center systems", meaning that a hydraulic pump powers the circuit and excess oil is discharged into a collection tank from which it is withdrawn to be recirculated.

A disadvantage of these conventional systems is the high power consumed by the oil flow rate passing through the system when the system is either during the steering procedure or during a stand-by condition.

Closed hydraulic circuits are also known, also called "load sensing", as they are based on load perceived. These are more efficient than open-centre circuits, but the margin pressure and stand-by pressure are higher and the dynamic oil flow required by the load sensing system to provide load-independent oil flow leads to energy consumption.

Open center circuits require larger components and a collection tank proportionate to the maximum flow rate of the hydraulic pump as well as a system for dissipating the heat generated by the lamination of the oil in the open center valves.

Some solutions provide that the hydraulic pump is electro-actuated, using a dedicated electric motor for steering the wheels. However, the implementation of open-center circuits involves a large consumption of electrical energy.

The main advantage of using an electro-actuated system is represented by the possibility of controlling the steering via different devices such as joystick, GPS, etc... Furthermore, it is easier to vary some response parameters of the steering system in order to improve driving comfort. Conventional closed hydraulic circuits could represent an alternative with greater efficiency, but such systems still require a dedicated loading system, generally called a "booster pump" to compensate for volumetric losses and ensure correct pressurization of the entire circuit, including the return oil branches.

This charging system represents another source of constant energy consumption, even when no hydraulic actuation is carried out.

Unless specifically excluded in the detailed description that follows, what is described in this chapter is to be considered as an integral part of the detailed description.

### Summary of the invention

The purpose of the present invention is to indicate a hydraulic steering system that does not require a booster pump, so as to improve the efficiency of the steering system.

The basic idea of the present invention is to guarantee the pressurization of the entire closed circuit supplying the steering cylinder, using a single electric two-way flow pump, without implementing any boost pump.

The circuit, being of the closed type, includes two interconnection lines between the electric pump and the steering actuator cylinder.

Each of the two ports of the dual flow pump is connected to one of the two circuit lines.

The circuit includes a check valve group arranged in a bridge and a pressure limiting group to keep the low pressure line pressurized. So the same electric pump pressurizes the delivery line to the regulation pressure value and simultaneously pressurizes the return line to a predetermined pressure threshold value.

The valve group is connected to a hydraulic accumulator to pressurize it independently of the direction of operation of the electric pump and in order to allow the hydraulic accumulator to pressurize, maintain the circuit pressurized independently of the operating conditions of the pump and to compensate for pressure variations on the low-pressure line. Advantageously, it is possible to deactivate the electric pump when it is not necessary to intervene on the steering angle, guaranteeing efficiency of the steering system.

In the following, an electric pump means a hydraulic pump driven in rotation by an electric motor.

The two supply lines are connected to the single hydraulic accumulator through said check valve group and through said pressure limiting valve arranged in series with the check valves, so as to pressurize the accumulator to the same pressure value as the low pressure line.

According to a preferred aspect of the invention, the hydraulic accumulator is also connected to the supply lines by means of overpressure valves in order to cushion any pressure peaks generated by sudden variations in the flow rate of the electric pump or by disturbances external to the hydraulic circuit.

According to a further aspect of the invention, the protection of the entire hydraulic circuit, rather than being achieved by means of overpressure valves (relief valves) which are highly energy dissipative and tend to generate heat, is achieved by means of a pressure sensor arranged to limit the electrical supply of the electric pump.

Advantageously, the pressure measurements made through the same pressure sensor can be exploited to perform a pressure/flow type control.

The dependent claims describe preferred variants of the invention, forming an integral part of the present description.

### Brief description of the figures

Further purposes and advantages of the present invention will be clear from the following detailed description of an example of implementation of the same (and its variants) and from the attached drawings given purely for explanatory and non-limiting purposes, in which:

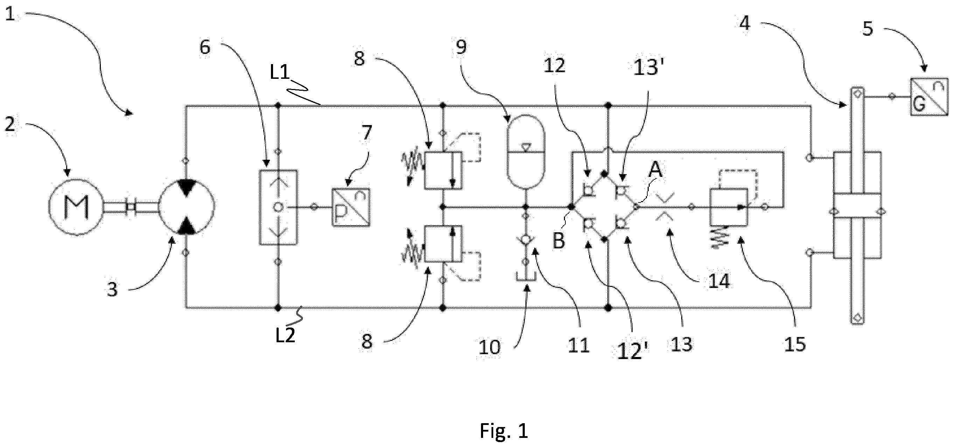

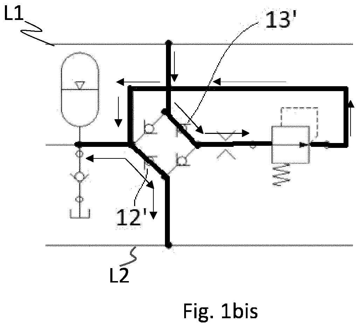

Fig. 1 shows a first embodiment of a hydraulic scheme which is the object of the present invention;
Fig. 1bis discloses an operating condition of a portion of the circuit;
Figs. 2 - 4 disclose variations of the scheme on Fig. 1;
Fig. 5 shows schematically a control operated on an actuator shown in the previous diagrams.

The same reference numbers and letters in the figures identify the same elements or components or functions.

It should also be noted that the terms "first", "second", "third", "higher", "lower" and the like may be used here to distinguish various elements. These terms do not imply a spatial, sequential, or hierarchical order for the modified elements unless specifically indicated or inferred from the text.

The elements and characteristics illustrated in the different preferred embodiments, including the drawings, can be combined with each other without departing from the scope of protection of the present application as described below.

### Detailed description

Fig. 1 shows a first implementation example of the circuit 1, which is the object of the present invention.

The electric pump 3 is driven in rotation by the electric motor 2. The pump is of the bidirectional type and is connected to two lines L1 and L2. Depending on how the electric motor M drives the pump 3 in rotation, it pressurizes line L1 or line L2. In reality, according to the present invention, pump 3 pressurizes both lines but at different pressure values.

Since it is a closed circuit, the oil pumped by pump 3 is withdrawn directly from the users, without any recovery tank.

In relation to the L1 or L2 line that is pressurized, this is appealed as "delivery line" or "high pressure line", while the other line is appealed as "return line" or "low pressure line".

For convenience, in the following discussion it is assumed that L1 line is the delivery line, while the L2 line is the return line. However, the roles can be exchanged by virtue of the direction of rotation of the electric pump 3.

The terms "high pressure" and "low pressure" have a relative meaning.

To measure the maximum value of the circuit pressure, the pressure sensor 7 selects, via the selector valve 6, the line with the highest pressure between L1 and L2.

The pressure sensor 7 allows to limit pressure peaks generated by the electric pump by intervening on the electrical power supply of the electric pump.

The lines L1 and L2 directly connect the electric pump 3 with the hydraulic cylinder 4 intended to operate the steering linkages.

Advantageously, the fact that the connection between the pump 3 and the hydraulic cylinder 4 is direct, i.e. without the intermediation of further hydraulic components, allows losses to be reduced and therefore considerable energy savings.

The solution that allows the return line, which for simplicity is assumed to be L2, to be kept pressurized, albeit at a lower pressure, is now described, in order to avoid cavitation phenomena in pump 3.

The scheme of the present invention is self-charging, in the sense that it does not require an additional charge pump, generally called "booster pump" and therefore, in addition to the electric pump 3, only passive components are present, i.e. valves and preferably at least one accumulator.

With reference to figure 1, assuming that line L1 is a delivery line, then let consider the check valves 12' and 13'.

As shown in figure 1bis, the flow of hydraulic oil passes through valve 13' and, after some adjustments, passes through valve 12' and reaches the low pressure line L2. However, when the high pressure line is line L2, then the path of the hydraulic fluid involves the check valves 12 and 13.

The adjustments mentioned above are carried out by means of a lamination valve 14 and a pressure regulation valve 15 arranged in series with each other to form the limiting group. The regulation valve is calibrated so as to ensure the desired pressure in the return line and in general in the entire circuit, when the electric pump is deactivated or when the electric pump is started, to compensate for cavitation phenomena due to hydraulic inertia.

A hydraulic accumulator is connected between the check valves 12, 12', and, in relation to the relative pressurization conditions, can behave as a user in parallel to the line L2 during a relative charging phase, when the electric pump is active, or as a pressure source, when the electric pump is deactivated or in the event of sudden activations of the electric pump.

The hydraulic accumulator 9, being connected to both lines L1, L2, is arranged to ensure that both remain pressurized at least to the return pressure, while the electric pump is deactivated or during peak operations of the electric pump 3.

In other words, during the operation of the electric pump 3, the hydraulic accumulator 9 supplies hydraulic oil to the low pressure line through the check valves 12 and 12' to compensate for any pressure reductions due to volumetric losses or excessive suction transients of the electric pump 3.

A hydraulic tank 10 is connected to the circuit 1 exclusively through the hydraulic accumulator 9 and a non-return valve 11 placed between the hydraulic tank and the hydraulic accumulator. In the event of cavitation, the check valve 11 opens allowing the flow of oil towards the hydraulic accumulator 9, loading the circuit. However, once the circuit is well charged, this tank does not further cooperate in the operation of the system.

Observing the diagram in figure 1, it is understood that a flow generated by the electric pump 3 must sequentially pass through a check valve 13 or 13', the lamination valve 14, the pressure regulation valve 15 and then reaches point B to which the accumulator is connected. These components do not allow efficient damping of pressure peaks. In addition, when the limiting unit is closed, due to the charging pressure being reached, the hydraulic accumulator is disconnected from the high pressure line and cannot contribute to any damping of pressure peaks that develop in it. Therefore, a pair of anti-shock valves 8 are provided, arranged to directly connect the lines L1 and L2 respectively with the hydraulic accumulator 9.

The anti-shock valves 8 are mainly used to protect the circuit in the event of pressure peaks or external overpressures. They are set to a threshold pressure value much higher than the maximum operating pressure of the system, assuming that they should never open, except in rare critical cases of overpressure in the system.

It should be noted that the sensor 7 allows the pressure in the circuit to be limited when it is possible to intervene through the electric motor 2, while the anti-shock valves have a behavior independent of the operating conditions of the electric motor and are therefore more suitable for compensating overpressures caused by external forces acting on the hydraulic cylinder 4.

The oil flow rate generated by the electric pump 3 is controlled by a processing unit, based on a position signal generated by the position sensor 5, associated with the hydraulic cylinder 4. This sensor provides feedback on the actual flow rate, position and speed of the rod of cylinder 4, while the processing unit controls and regulates the oil flow generated by the pump.

The flow rate can be controlled by altering the speed of the electric motor and/or varying the displacement of pump 3 if this has variable displacement.

The hydraulic connection between lines L1, L2 and with the hydraulic accumulator is now described in detail.

Observing the configuration of the valves, they resemble a bridge configuration, in which the valves 12 and 13' are mutually in series and with the same opening direction, defining a first branch. The valves 12' and 13 are mutually in series and wit the same opening direction, defining a second branch.

The first branch is connected in parallel with the second branch resulting with the same opening direction at the respective nodes A, B of the branches.

One of the two lines L1, L2 is connected between the first and second valve of the first branch, while the other of the two lines L2, L1 is connected between the first and second valve of the second branch.

The limitation group 14, 15 is operationally connected between the nodes A and B so as to allow oil circulation from the first node A to the second node B.

The scheme thus described turns out to be not only efficient, in the sense that it allows the implementation of a single double-flow pump, but also compact.

If we analyze figure 1 in detail, we understand that when the pressure inside the accumulator is greater than any of the pressure values of both lines L1, L2, it is able to provide hydraulic flow to them.

Conversely, the hydraulic accumulator is connected to the high pressure line, when the pump is operational, only as long as the limiting unit 14, 15 allows flow circulation. The limiting group allows flow circulation only when it detects a drop in pressure on the low pressure line.

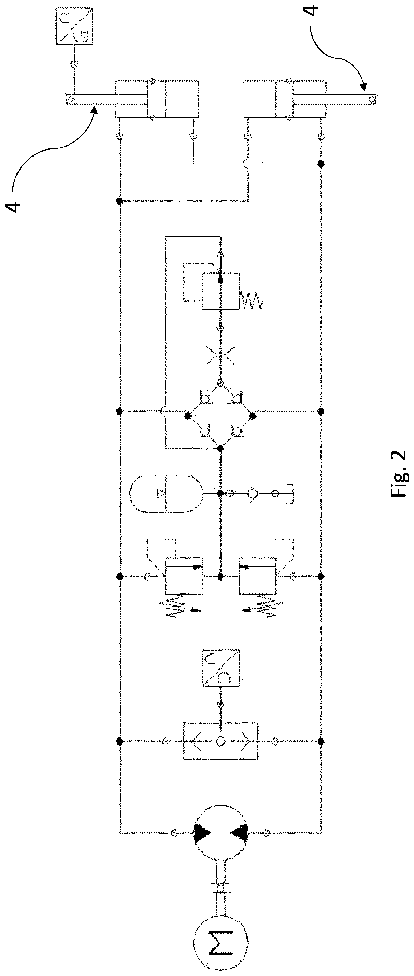

The solution shown in figure 2 differs from the scheme in figure 1 in that two single-rod hydraulic actuators 4 are implemented, rather than a double-rod cylinder.

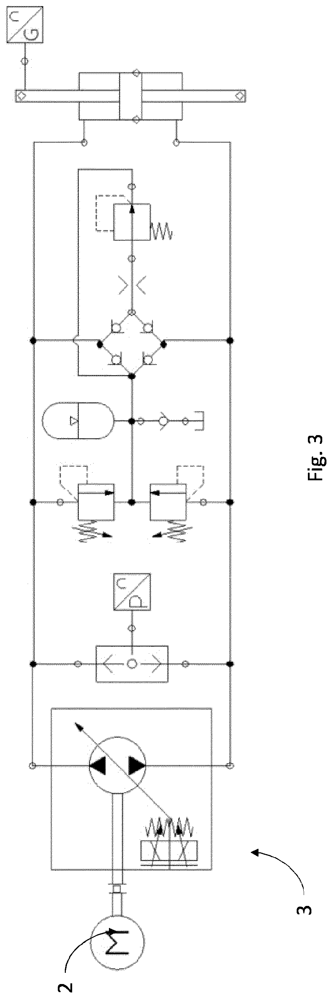

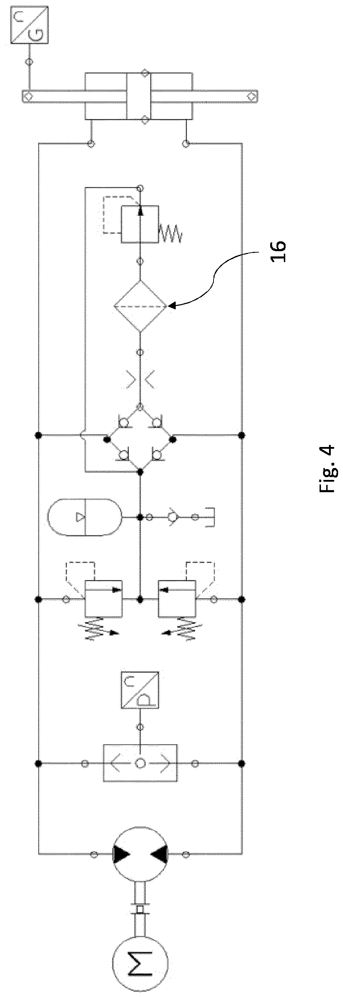

The solution in figure 3 differs from the scheme in figure 1 due to the fact that instead of a fixed displacement pump, a variable displacement pump is implemented and in which the flow rate regulation is carried out using a regulator rather than intervening on the rotation speed of the prime mover. The solution in figure 4 differs from the diagram in figure 1 in that it includes a filter 16 arranged between the lamination valve 14 and the pressure regulation valve 15. Evidently, the previous variants can be combined with each other, for example, the implementation of two single rod actuators with a variable displacement pump and/or with filter 16 can be envisaged.

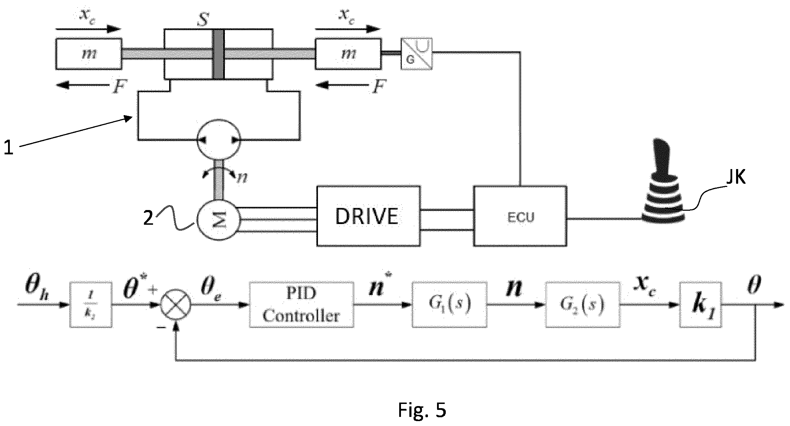

Figure 5 shows an electro-hydraulic scheme implementing hydraulic scheme 1 of the previous figures.

The signal generated by the joystick JK is sent to a processing unit ECU which conditions it to activate a power supply device DRIVE of the electric motor 2.

The processing unit ECU controls the DRIVE using a closed loop scheme in which the input variable is the rotation speed of the electric motor 2 and the controlled variable is the displacement of the actuator rod 4, acquired through the sensor 5.

In addition to the calibratable PID controller, which is per se known, the transfer functions G1 and G2 are shown, respectively of the electric motor 2 and the hydraulic components of circuit 1.

The diagram on figure 5 allows to control the flow rate generated by pump 3, via the rotation speed of the motor, feedback-driven with the actual movement speed of the actuator. Instead, as anticipated above, the pressure sensor 7 allows the actuation force generated by the cylinder 4 to be cut or adjusted and consequently allows the electrical power absorbed by the steering system to be limited.

The low losses and high efficiency of the electro-hydraulic scheme described, preferably associated with an advanced electronic pressure/flow control, allows the need to dissipate heat from the hydraulic oil to be reduced to a minimum. Therefore, thanks to the present invention it is possible to minimize losses.

The implementation of an electric pump coupled to a closed-center hydraulic circuit allows electricity to be consumed only when necessary. Furthermore, the rotation speed and therefore the energy spent to produce the necessary oil flow can be limited to the actual steering control needs.

For example, if the steering control is achieved using a joystick JK, as shown in figure 5, then when the joystick is released, then the electric motor 3 is stopped, saving electrical energy.

Constructive variations to the non-limiting example described are possible, without departing from the scope of protection of the present invention, including all the equivalent embodiments for a person skilled in the art, to the contents of the claims.

From the above description, the person skilled in the art is able to realize the object of the invention without introducing further construction details.

## Claims

1. Hydraulic steering system comprising a two-way flow electric pump (2, 3) and at least one actuator cylinder (4) powered by said electric pump via a closed hydraulic circuit (1) comprising at least a first line (L1) of pressure supply and a second pressure supply line (L2) and wherein said circuit includes reciprocal connection means (12, 12', 13, 13', 14, 15) between said first and second lines arranged so that when the electric pump is operational by pressurizing one of said first and second supply lines to a first pressure value, said connection means are configured to pressurize the other line to a second established pressure value, lower than said first pressure value.

2. System according to claim 1, wherein said connection means are passive.

3. System according to claim 1 or 2, further comprising a hydraulic accumulator (9), operationally connected to said connection means (12, 12', 13, 13', 14, 15), so as to be operationally in parallel with said other line.

4. System according to any one of the previous claims 1 - 3, wherein said connection means comprise a valve group (12, 12, 13,13') configured to pressurize said other line independently of a direction of circulation imposed by the hydraulic pump.

5. System according to any one of the preceding claims 1 - 3, wherein said connection means comprise a pressure limiting assembly (14, 15) which includes a lamination valve (14) and a pressure regulating valve (15) arranged in series with each other.

6. System according to one of the previous claims 4 or 5, wherein said valve group includes four valves arranged in a bridge fashion, wherein the first two valves (12, 13') are mutually arranged in series and concordant in opening, defining a first branch and second two valves (12', 13) are mutually arranged in series and concordant in opening, defining a second branch, and in which the first and second branches are interconnected at their respective nodes (A, B) in parallel so as to be concordant in opening, and wherein one of the two lines (L1, L2) is connected between the first and second valve of the first branch, while the other of the two lines (L2, L1) and to the respective ends of said branches the limitation group (14, 15) is operationally connected so as to allow a circulation of hydraulic fluid from a first (A) of said respective nodes to a second (B) of said respective nodes.

7. System according to claim 6, wherein said hydraulic accumulator (9) is connected to the connection means (12, 12', 13, 13', 14, 15) in said second end (B).

8. System according to any one of the previous claims, wherein said at least one actuator cylinder (4) has a double rod, or wherein the system comprises two actuator cylinders with a single rod.

9. A system according to claim 7 or 8, wherein said pressure limiting assembly (14, 15) includes a filter arranged between said lamination valve (14) and said pressure regulating valve (15).

10. A system according to any one of the preceding claims, further comprising a processing unit (ECU) and a human/machine interface device (JK) for generating a steering control signal and the interface device is configured to assume an activation position and a release position and wherein the processing unit is configured to deactivate said electric pump (4, 5) when said interface device is in a rest condition.

11. System according to claim 10, further comprising a pressure sensor (7) and a selector valve (6) arranged to connect the pressure sensor (7) with both said first and second lines (L1, L2), and wherein said processing means are configured to acquire a signal generated by said pressure sensor and to limit or interrupt an electrical supply of said electric pump (3) in response to exceeding a predetermined pressure limit threshold.

12. System according to claim 11, wherein said processing unit is further configured to regulate an operation of the hydraulic pump according to a predetermined flow/pressure control scheme as a function of said signal generated by the pressure sensor (7).

13. System according to any of the previous claims 3 - 12, further comprising an accumulation tank (10) of hydraulic fluid of the hydraulic circuit (1), operationally connected with the circuit (1) exclusively in said second end (B) via a check valve (11).

14. Agricultural or work vehicle comprising a steering axle and a hydraulic steering system according to any of claims 1 - 13.
